Europäisches Patentamt

European Patent Office

Office européen des brevets

(19)

(11) Numéro de publication: **0 282 426**
**B1**

(12) **FASCICULE DE BREVET EUROPEEN**

(45) Date de publication du fascicule du brevet:
**03.10.90**

(51) Int. Cl.⁵: **B62D 13/04**

(21) Numéro de dépôt: **88440011.0**

(22) Date de dépôt: **25.02.88**

(54) **Dispositif de commande de roues directrices d'une remorque, et remorque equipée d'un tel dispositif.**

(30) Priorité: **27.02.87 FR 8702895**

(43) Date de publication de la demande:
**14.09.88 Bulletin 88/37**

(45) Mention de la délivrance du brevet:
**03.10.90 Bulletin 90/40**

(84) Etats contractants désignés:
**AT BE CH DE ES FR GB GR IT LI LU NL SE**

(56) Documents cités:
**EP-A- 0 134 036**
**FR-A- 1 363 252**
**FR-A- 2 492 331**
**US-A- 3 212 793**

(73) Titulaire: **ETABLISSEMENTS BILLIG S.A.R.L., 13 rue de Hésingue, F-68220 Folgensbourg(FR)**

(72) Inventeur: **Billig Jean-Paul, 9, rue des Pres, 68220 Folgensbourg(FR)**

(74) Mandataire: **NITHARDT, Roland, CABINET ROLAND NITHARDT 12, rue du 17 Novembre B.P. 1445, F-68071 Mulhouse Cedex(FR)**

ACTORUM AG

## Description

La présente invention concerne un dispositif de commande de roues directrices d'une remorque reliée par une articulation à un véhicule tracteur, comportant au moins un raccordement hydraulique de la remorque à un circuit hydraulique sous pression du véhicule tracteur, un mécanisme de direction agissant sur les roues directrices de la remorque par au moins un vérin hydraulique, et une unité de commande hydraulique disposée sur la remorque, entre ledit raccordement hydraulique et ledit vérin hydraulique. L'invention concerne également une remorque à châssis rigide comportant au moins un essieu directeur.

En général, on trouve des remorques ayant un châssis rigide avec plusieurs essieux, soit parmi les véhicules agricoles, le châssis rigide de la remorque comportant alors un timon fixe accroché à un tracteur, soit dans les véhicules routiers du type semi-remorques, soit sur des véhicules spéciaux tels que des engins de chantier ou des remorques de camping. Habituellement, les essieux sont non directeurs et ils sont aussi rapprochés que possible les uns des autres pour permettre les virages. Cela n'empêche pas un ripage latéral des roues sur la chaussée à chaque virage. Il en résulte une usure des pneus qui est d'autant plus importante sur les remorques effectuant souvent des virages serrés, comme c'est le cas notamment avec des véhicules agricoles ou des engins de chantier.

Pour éviter cet inconvénient, on connaît des remorques ayant des roues qui sont orientables au moyen d'un dispositif commandé depuis le poste de conduite du véhicule tracteur. Un tel dispositif peut être actionné manuellement par le conducteur, mais alors il requiert beaucoup d'attention et ne peut donc être utilisé que dans certaines manoeuvres spéciales. Un dispositif de ce genre peut aussi être couplé aux organes de direction du véhicule tracteur main il a alors pour inconvénients une grande complexité, un coût élevé et un réglage délicat pour que les trajectoires de la remorque soient conformed à celles du véhicule tracteur. L'installation sur le véhicule tracteur est relativement importante.

La publication EP-A-0134 036 décrit un dispositif du genre indiqué en préambule, dans un véhicule du type semi-remorque. Le mécanisme de direction de la remorque est commandé hydrauliquement en permanence, sur la base de l'angle formé par les axes longitudinaux du tracteur et de la remorque, au moyen d'une soupape à tiroir rotatif, montée sur la remorque et actionnée par un secteur denté qui s'engrène sur un élément de la sellette du véhicule tracteur. Une telle liaison mécanique entre la remorque et le tracteur est très délicate. Elle est inutilisable pour des remorques à timon, notamment agricoles.

Par conséquent, la présente invention a pour but de pallier ces inconvénients en fournissant un dispositif du type indiqué en préambule, réalisable sous une forme simple et peu coûteuse et permettant une commande automatique des roues directrices d'une remorque sans nécessiter des installations coûteuses sur le véhicule tracteur, de manière à être utilisable notamment sur les remorques agricoles.

Dans ce but, le dispositif selon l'invention est caractérisé en ce qu'il comporte une unité électronique disposée sur la remorque pour commander l'unité de commande hydraulique en fonction de signaux fournis par des capteurs, au moins un capteur d'angle délivrant à l'unité électronique un signal représentatif de l'angle formé en plan par les axes longitudinaux respectifs du véhicule tracteur et de la remorque, et un capteur de contrôle délivrant à l'unité électronique un signal représentatif de la position du mécanisme de direction.

Dans une première forme de réalisation, l'unité de commande hydraulique comporte un distributeur à plusieurs voies. Dans une autre forme de réalisation, elle comporte un diviseur de débit piloté.

Le capteur d'angle peut avantageusement être un capteur analogique, de même que le capteur de contrôle. Ces capteurs peuvent être par exemple des potentiomètres ou des capteurs à induction. Dans d'autres réalisations, on peut aussi utiliser des capteurs incrémentiels avec une unité électronique appropriée.

L'invention concerne également une remorque à châssis rigide comportant au moins un essieu directeur et un dispositif de commande des roues directrices du type défini ci-dessus. En général, une telle remorque comporte un essieu non directeur et un ou deux essieux directeurs dont les roues sont commandées par le dispositif, avec un mécanisme de direction commun.

Dans une autre variante, la remorque peut comporter uniquement des essieux directeurs.

L'invention sera mieux comprise à l'aide de la description suivante d'un exemple de réalisation, en référence aux dessins annexés, dans lesquels :

La figure 1 représente schématiquement une remorque agricole selon l'invention, attelée à un tracteur, et

La figure 2 est un schéma du dispositif de commande des roues directrices de la remorque.

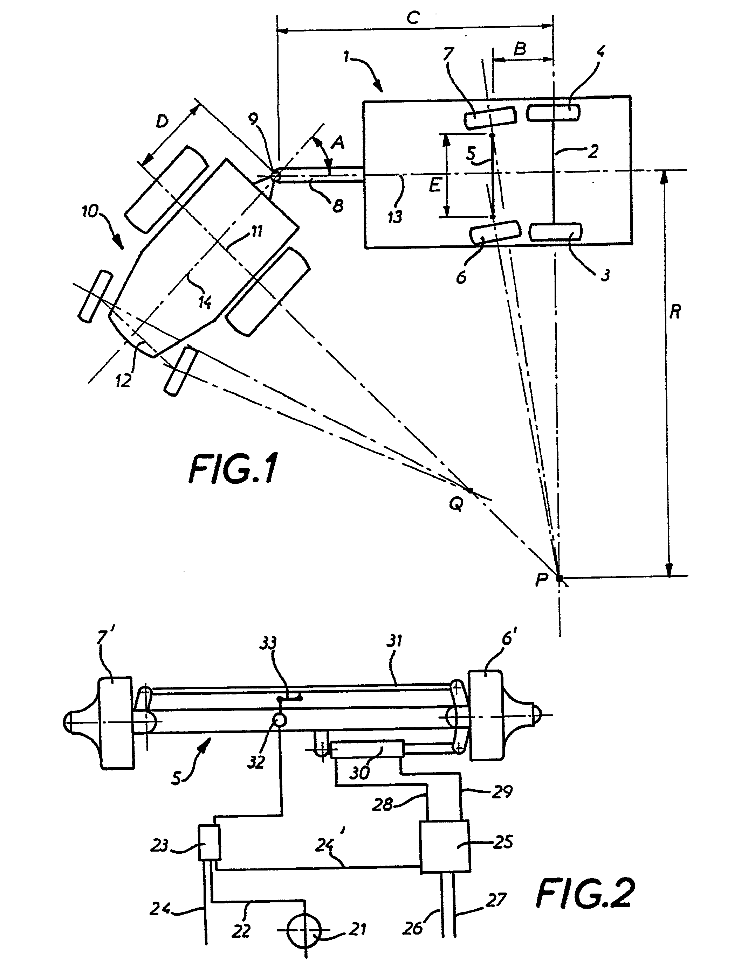

En référence à la figure 1, une remorque agricole 1 comporte un essieu arrière 2 ayant deux roues 3 et 4 non directrices, et un essieu avant 5 ayant deux roues directrices 6 et 7. Les essieux 2 et 5 sont espacés longitudinalement l'un de l'autre d'une valeur B qui est relativement faible dans l'exemple représenté, de sorte que leurs roues respectives sont proches l'une de l'autre de chaque côté de la remorque, mais cet aspect n'est pas essentiel dans l'invention. On notera aussi que l'essieu directeur pourrait être placé derrière l'essieu non directeur.

La remorque 1 comporte un châssis rigide, c'est-à-dire non articulé, qui comprend à l'avant un timon fixe 8 conçu pour être accroché, par une articulation 9, sur un dispositif d'attelage d'un tracteur agricole 10 de type classique comportant au moins une prise hydraulique pour actionner certains de ses équipements. Le tracteur a un essieu arrière non directeur 11 et un essieu avant directeur 12.

La figure 1 montre également la position en plan de tous les axes des roues de ce convoi. Les axes des essieux non directeurs respectifs 2 et 11 de la remorque et du tracteur se coupent en un point P qui détermine le rayon instantané R de la trajectoire parcourue par le milieu de l'essieu 2 de la remorque. La position de ce point P est déterminée par l'angle horizontal A, formé par les axes longitudinaux respectifs 13 et 14 de la remorque et du tracteur, et par les longeurs C et D qui sont propres à chacun des véhicules. D'autre part, les axes des roues de l'essieu avant 12 du tracteur coupent théoriquement l'axe de l'essieu arrière 11 en un point Q qui, à un instant donné, n'est pas nécessairement confondu avec le point P, car sa position ne dépend pas de la position de la remorque.

Pour que les roues directrices 6 et 7 de la remorque 1 ne subissent pas de ripage latéral en parcourant un virage, il fait que leurs axes respectifs passent par le point P. Le dispositif selon l'invention est agencé pour remplir cette condition géométrique, sur la base des quatre paramètres indépendants A, B, C et D, ainsi que de l'écartement E entre les axes de pivotements respectifs des roues directrices 6 et 7. Comme le paramètre A est le seul qui varie au cours de l'utilisation du convoi, il suffit de mesurer en permanence cet angle pour que le dispositif dispose toujours des valeurs de consignes nécessaires. En particulier, on remarque que le seul paramètre extérieur à la remorque 1 est la cote constante D du tracteur. Par conséquent, aucun paramètre variable ne doit être mesuré dans le tracteur lui-même, par exemple dans ses organes de direction, ce qui simplifie considérablement la conception du dispositif et son fonctionnement.

Le schéma du dispositif de commande des roues directrices 6 et 7 de la remorque est illustré plus en détail par la figure 2. Un capteur d'angle 21 est connecté au timon 8 de la remorque, et monté sur le dispositif d'attelage du tracteur dans l'axe de l'articulation 9. Ce capteur coopère avec un élément (non représenté) couplé au timon. Par exemple, il peut s'agir d'un bras articulé reliant le capteur au timon. On prévoira de préférence un jeu mécanique dans cette liaison afin d'éviter une réaction du capteur aux petits mouvements de la remorque, particulièrement en torsion. Le capteur 21 délivre un signal représentatif de l'angle A sur une ligne 22 reliée à une unité électronique 23 installée sur la remorque. L'unité 23 est alimentée en basse tension par une ligne 24 qui peut être branchée sur la batterie électrique du tracteur. Par une ligne 24', l'unité électronique 23 commande une unité de commande hydraulique 25 qui est reliée aux circuits hydrauliques du tracteur par des conduites 26 et 27. L'unité 25 commande, par l'entremise de conduites hydrauliques 28 et 29, un vérin de direction 30 qui oriente les roues directrices 6 et 7 (figurées ici par leurs moyeux respectifs 6' et 7') grâce à une timonerie de direction classique 31. Dans le cas présent, l'unité 25 comprend essentiellement une soupape à quatre voies et trois positions, pour délivrer sélectivement la pression hydraulique dans l'une ou dans l'autre des conduites 28 et 29, ou pour obturer ces deux conduites dans sa position neutre. En variante, l'unité 25 pourrait comporter un diviseur de débit piloté pour commander le vérin 30, ce qui aurait l'avantage d'éviter un échauffement de l'huile du tracteur. La réalisation de tels organes hydrauliques est bien connue et n'a pas besoin d'être décrite ici.

Enfin, le dispositif comprend un capteur de contrôle 32 qui est fixe sur l'essieu 5 et qui est relié à la timonerie 31, par exemple au moyen d'une biellette 33, pour délivrer à l'unité électronique 23 un signal représentatif du degré de braquage des roues directrices 6 et 7 de la remorque.

Le principe de fonctionnement de ce dispositif est le suivant. L'unité électronique 23 comporte essentiellement un circuit comparateur qui calibre les signaux respectifs délivrés par les capteurs 21 et 32, les compare en permanence et, s'il y a lieu, de modifier le braquage des roues dans un sens ou dans l'autre, délivre un signal de commande à l'un ou l'autre de deux circuits relais alimentant les électro-aimants respectifs de la soupape à trois positions de l'unité 25 pour actionner le vérin 30. Quand le capteur de contrôle 32 indique que le degré de braquage correspondant à l'angle A (en fonction des paramètres B, C, D et E) est atteint, l'unité 23 laisse revenir la soupape en position neutre, ce qui bloque la position du vérin 30 et de la timonerie de direction, jusqu'à ce qu'une variation de l'angle A enclenche un nouveau cycle analogue.

Grâce à l'information rétroactive fournie par le capteur de contrôle 32, la commande de la partie hydraulique du dispositif est extrêmement simple, tout en permettant d'obtenir toujours le braquage voulu. Les capteurs 21 et 32 peuvent être avantageusement du type analogique, par exemple des potentiomètres qui sont peu coûteux. De même, l'unité électronique 23 peut aussi être essentiellement analogique. Dans cette unité, les valeurs des paramètres B, C et E de la remorque peuvent être représentées par des paramètres électriques constants. On pourrait aussi donner l'un ou l'autre de ces paramètres dans l'unité 23 par un organe réglable, par exemple un potentiomètre. Dans le cas des tracteurs agricoles, le paramètre D est pratiquement toujours le même.

Il est évident que l'application du dispositif selon l'invention n'est pas limité à une remorque ayant un essieu fixe et un essieu directeur. Il pourrait y avoir notamment un ou plusieurs essieux directeurs, ceux-ci étant commandés par une tringlerie de direction commune, un seul vérin hydraulique ou plusieurs, et un dispositif de commande tel que décrit ci-dessus. Toutes les roues de la remorque pourraient être directrices, en vue de faciliter certaines manoeuvres. Toutes les roues directrices seront alors couplées mécaniquement. Un tel principe peut être avantageux sur une remorque agricole par exemple une remorque ayant un seul essieu, car les roues de cette remorque peuvent alors être dirigées de manière à circuler toujours dans les mêmes traces que les roues arrières du tracteur. On réduit alors sensiblement les dommages causés aux cultures par ces véhicules notamment lors des traitements au moyen de pulvérisateurs. Afin d'obtenir le même effet dans les cas où des raisons d'encombrement empêchent de prévoir des roues orientables par rapport au châssis de la remorque, on peut équiper la remorque d'un timon articulé au châssis et orientable hydrauliquement par un dispositif selon l'invention. Ainsi, les roues peuvent être montées d'une façon très simple sur le châssis de la remorque et elles sont néanmoins directrices.

Outre les remorques agricoles, les véhicules susceptibles d'utiliser le dispositif selon l'invention comprennent les remorques routières et les semi-remorques, ainsi que certains véhicules industriels, de manutention et de travaux publics.

**Revendications**

1. Dispositif de commande de roues directrices d'une remorque (1) reliée par une articulation à un véhicule tracteur (10), comportant au moins un raccordement hydraulique de la remorque à un circuit hydraulique sous pression du véhicule tracteur, un mécanisme de direction agissant sur les roues directrices de la remorque par au moins un vérin hydraulique (30) et une unité de commande hydraulique (25) disposée sur la remorque, entre ledit raccordement hydraulique et ledit vérin hydraulique caractérisé en ce qu'il comporte :
- une unité electronique (23) disposée sur la remorque pour commander ladite unité de commande hydraulique en fonction de signaux fournis par des capteurs,
- au moins un capteur d'angle (21) délivrant à l'unité électronique un signal représentatif de l'angle (A) formé en plan par les axes longitudinaux respectifs du véhicule tracteur (10) et de la remorque (1),
- et un capteur de contrôle (32) délivrant à l'unité électronique un signal représentatif de la position du mécanisme de direction (31).

2. Dispositif selon la revendication 1, caractérisé en ce que l'unité de commande hydraulique (25) comporte un distributeur à plusieurs voies.

3. Dispositif selon la revendication 1, caractérisé en ce que l'unité de commande hydraulique (25) comporte un diviseur de débit piloté.

4. Dispositif selon l'une des revendications précédentes, caractérisé en ce que le capteur d'angle (21) est un capteur analogique.

5. Dispositif selon l'une des revendications précédentes, caractérisé en ce que le capteur de contrôle (32) est un capteur analogique.

6. Dispositif selon la revendication 4 ou 5, caractérisé en ce que ledit capteur (21, 32) est un capteur à potentiomètre.

7. Remorque à châssis rigide comportant au moins un essieu directeur (5), caractérisée en ce qu'elle comporte un dispositif de commande des roues directrices selon l'une quelconque des revendications précédentes.

8. Remorque selon la revendication 7, caractérisée en ce qu'elle comporte un essieu non directeur (2) et un ou deux essieux directeurs (5), dont les roues sont commandées par le dispositif, avec un mécanisme de direction commun.

9. Remorque selon la revendication 7, caractérisée en ce qu'elle comporte uniquement des essieux directeurs.

10. Remorque selon l'une des revendications 7 à 9, caractérisée en ce qu'elle est une remorque agricole (1) et en ce que le capteur d'angle (21) est couplé au timon (8) de la remorque.

**Claims**

1. A control device for the steering wheels of a trailer (1) connected by a joint to a towing vehicle (10), comprising at least one hydraulic connection for the trailer to a pressurised hydraulic circuit of the towing vehicle, a steering mechanism acting on the steering wheels of the trailer by at least one hydraulic jack (30) and a hydraulic control unit (25) disposed on the trailer, between said hydraulic connection and said hydraulic jack, characterised in that it comprises:
- an electronic unit (23) disposed on the trailer to control said hydraulic control unit as a function of the signals provided by sensors,
- at least one angle sensor (21) providing the electronic unit with a signal representing the angle (A) formed in one plane by the respective longitudinal axes of the towing vehicle (10) and of the trailer (1),
- and a control sensor (32) providing the electronic unit with a signal representing the position of the steering mechanism (31).

2. A device according to Claim 1, characterised in that the hydraulic control unit (25) comprises a multitrack distributor.

3. A device according to Claim 1, characterised in that the hydraulic control unit (25) comprises a piloted flow divider.

4. A device according to one of the above Claims, characterised in that the angle sensor (21) is an analogue sensor.

5. A device according to one of the above Claims, characterised in that the control sensor (32) is an analogue sensor.

6. A device according to Claim 4 or 5, characterised in that said sensor (21, 32) is a potentiometer sensor.

7. A trailer having a rigid chassis comprising at least one steering axle (5), characterised in that it comprises a control device for the steering wheels as specified in any one of the above claims.

8. A trailer according to Claim 7, characterised in that it comprises a non-steering axle (2) and one or two steering axles (5), the wheels of which are controlled by the device, with a common steering mechanism.

9. A trailer according to Claim 7, characterised in that it only comprises steering axles.

10. A trailer according to one of Claims 7 to 9, characterised in that it is an agricultural trailer (1) and in that the angle sensor (21) is coupled to the pole (8) of the trailer.

**Patentansprüche**

1. Steuervorrichtung für die Lenkräder eines Anhängers (1), der über eine Schwenkeinrichtung mit einem Schleppfahrzeug (10) verbunden ist, bestehend aus mindestens einem hydraulischen Anschluß des Anhängers an eine hydraulische Druckleitung des Schleppfahrzeuges, einer über mindestens einen hydraulischen Zylinder (30) auf die Lenkräder des Anhängers wirkenden Lenkeinrichtung und einem, zwischen dem hydraulischen Anschluß und dem hydraulischen Zylinder angeordneten hydraulischen Steuerelement (25), dadurch gekennzeichnet, daß sie folgendes aufweist:

- ein auf dem Anhänger angeordnetes elektronisches Element (23) zur Steuerung des hydraulischen Steuerelements in Abhängigkeit der von Sensoren abgegebenen Signale,

- mindestens einen Winkelgeber (21), der an das elektronische Element ein Signal abgibt, welches dem im Grundriß von den jeweiligen Längsachsen des Schleppfahrzeuges (10) und des Anhängers (1) gebildeten Winkel (A), entspricht,

- und einen Kontrollsensor (32), der an das elektronische Element ein der Stellung der Lenkeinrichtigung (31) entsprechendes Signal abgibt.

2. Vorrichtung nach Anspruch 1, dadurch gekennzeichnet, daß das hydraulische Steuerelement (25) einen Mehrwegeverteiler aufweist.

3. Vorrichtung nach Anspruch 1, dadurch gekennzeichnet, daß das hydraulische Steuerelement (25) einen ferngesteuerten Mengenverteiler aufweist.

4. Vorrichtung nach einem der vorhergehenden Ansprüche, dadurch gekennzeichnet, daß der Winkelgeber (21) ein Analog-Sensor ist.

5. Vorrichtung nach einem der vorhergehenden Ansprüche, dadurch gekennzeichnet, daß der Kontrollsensor (32) ein Analog-Sensor ist.

6. Vorrichtung nach Anspruch 4 oder 5, dadurch gekennzeichnet, daß der Geber (21, 32) ein Potentiometergeber ist.

7. Anhänger mit starrem Gestell, mit mindestens einer Lenkachse (5), dadurch gekennzeichnet, daß er eine Steuervorrichtung für die Lenkräder gemäß einer der vorhergehenden Ansprüche aufweist.

8. Anhänger nach Anspruch 7, dadurch gekennzeichnet, da er eine nicht gelenkte Achse (2) und eine oder zwei Lenkachsen (5) aufweist, deren Räder mit einer gemeinsamen Lenkeinrichtung über die Vorrichtung gesteuert sind.

9. Anhänger nach Anspruch 7, dadurch gekennzeichnet, daß er nur Lenkachsen aufweist.

10. Anhänger nach einem der Ansprüche 7 bis 9, dadurch gekennzeichnet, daß er ein landwirtschaftlicher Anhänger (1) ist und daß der Winkelgeber (21) an die Anhängerdeichsel gekoppelt ist.

FIG.1

FIG.2